# EUROPEAN PATENT APPLICATION

(11) **EP 2 688 339 A2**
(43) Date of publication of application: **22.01.2014**
(21) Application number: 13175963.1
(22) Date of filing: 10.07.2013
(51) Int. Cl.: H04W 36/14, H04W 36/22, H04W 36/30

(54) **Network connection control apparatus and method of mobile terminal**

(30) Priority: 18.07.2012 KR 20120078126
(71) Applicant: Samsung Electronics Co., Ltd, Gyeonggi-do 443-742 (KR)
(72) Inventor: Park, Jongman, 443-742 Gyeonggi-do (KR); Seo, Jeongseok, 443-742 Gyeonggi-do (KR); Lee, Dongwook, 443-742 Gyeonggi-do (KR)
(74) Representative: Birchenough, Lewis

(57) **Abstract**

A network connection control apparatus and method of a terminal for switching connection between heterogeneous networks depending on the data communication environment are provided. The communication network connection control method of a terminal includes measuring received signal strength and Internet Protocol (IP) packet transmission and reception amounts in a state where the terminal is connected to an IP network, switching, when the received signal strength is equal to or less than a predetermined received signal strength threshold, from the connection to the IP network to a connection to a cellular network, comparing, when the received signal strength is greater than the threshold, the IP packet reception amount with a predetermined reception threshold, and switching, when the IP packet reception amount is equal to or less than the reception threshold, from the connection to the IP network to the connection to the cellular network.

## Description

### BACKGROUND OF THE INVENTION

### 1. Field of the Invention:

The present invention relates to a network connection control apparatus and method of a mobile terminal.More particularly, the present invention relates to a network connection control apparatus and method of a terminal for switching a connection among heterogeneous networks depending on a data communication environment.

### 2. Description of the Related Art:

A mobile terminal is provided with multiple radio communication modules for multiple wireless communication modes. For example, a mobile terminal is configured to support voice and data communication through cellular networks such as Long Term Evolution (LTE) and 3^{rd} Generation (3G) networks and Internet Protocol (IP) networks such as Wi-Fi, WiMAX, and WiBro. In the following description, the LTE and 3G networks are referred to as cellular networks, and the Wi-Fi, WiMAX, and WiBro are referred to as Internet Protocol (IP) networks. Typically, a cellular network is a billing-based network, while the IP network is a billing-free network. Accordingly, it is preferred that the mobile terminal is configured to attempt connection through the IP network for data communication. In the following, the description is made by focusing on LTE as a cellular network and Wi-Fi as an IP network.

The mobile terminal uses the Wi-Fi module by default and the LTE module in a non-Wi-Fi area for data communication. In a situation where a streaming service is received on the move, Internet access service in a high density area, or web-browsing/streaming service in a low electric field area, the user undergoes significant degradation of the data communication service quality despite the Wi-Fi connection not being broken. Typically, the mobile terminal does not switch the connection from Wi-Fi to LTE as far as the connection is maintained on the Wi-Fi layer, and this is because the mobile terminal operates with a restricted connection control function based on only the Wi-Fi Received Signal Strength Indicator (RSSI).

In more detail, if a Wi-Fi connection is established, the mobile terminal releases the LTE connection. In this case, the mobile terminal does not attempt to establish the LTE connection until the Wi-Fi connection (e.g., Media Access Control (MAC) layer connection) is released, even in the situation where the Wi-Fi connection no longer works (e.g., instable communication environment in spite of a normal RSSI level as aforementioned). Although the Wi-Fi signal is too weak to maintain the Wi-Fi connection, if the physical connection is not broken, the mobile terminal unnecessarily attempts a connection to the Wi-Fi network (e.g., Internet access is not possible). Also, even when the number of mobile terminals connected to an Access Point (AP) increases to cause traffic congestion in spite of adequate Wi-Fi signal quality, the mobile terminal holds the Wi-Fi connection.

As described above, the mobile terminal unnecessarily maintains the Wi-Fi connection even in the situation where normal data communication service is not possible due to a weak Wi-Fi signal without attempting the LTE connection, resulting in network utilization inefficiency of a mobile terminal. Also, the mobile terminal unnecessarily attempts a Wi-Fi connection in the situation where too many users are connected to the Wi-Fi network to provide the normal data communication service, resulting in an unnecessary waste of battery power. That is, the mobile terminal holds the connection to the Wireless Local Area Network (WLAN) which cannot provide a network service normally due to the low packet data rate dropped by MAC layer congestion and significant interference in spite of the strong signal strength of the AP, resulting in a reduction of network utilization efficiency and an increase of unnecessary battery consumption.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention has been made in an effort to address the above problem, and it is an aspect of the present invention to provide an apparatus and method for controlling network connection of a mobile terminal based on a metric defined for measuring and assessing data communication service utilization probability in a Wireless Local Area Network (WLAN) communication environment.

It is another aspect of the present invention to provide a control apparatus and method of a mobile terminal for switching between cellular and Internet Protocol (IP) networks based on the Internet utilization quality analyzed by the mobile terminal from the view point of the user in the WLAN environment.

It is another aspect of the present invention to provide an apparatus and method for controlling network connection for data communication of a mobile terminal based on the WLAN usability determined by measuring the signal strength of WLAN, IP packet Reception (Rx)/ Transmission (Tx) of WLAN, and/or collision among mobile terminals. That is, an aspect of the present invention is to provide an apparatus and method for controlling network connection for data communication of the mobile terminal based on the analysis result on the WLAN signal strength, IP packet Rx/Tx, collision, and/or terminal mobility.

It is still another aspect of the present invention to provide an apparatus and method for determining handover of the mobile terminal without assistance of a base station or a server based on the radio quality measured by analyzing WLAN signal strength, IP packet Rx/Tx, collision, and/or terminal mobility.

In accordance with an aspect of the present invention, a communication network connection control method of a terminal is provided.The communication network connection control method includes measuring received signal strength and IP packet transmission and reception amounts in a state where the terminal is connected to an IP network, switching, when the received signal strength is equal to or less than a predetermined received signal strength threshold, from the connection to the IP network to a connection to a cellular network, comparing, when the received signal strength is greater than the threshold, the IP packet reception amount with a predetermined reception threshold, switching, when the IP packet reception amount is equal to or less than the reception threshold, from the connection to the IP network to the connection to the cellular network.

In accordance with another aspect of the present invention, a communication network connection control apparatus of a terminal is provided.The apparatus includes a first communication unit which connects to an IP network, a second communication unit which connects to a cellular network, a storage unit which stores a received signal strength threshold and a reception amount threshold, and a control unit which controls measuring received signal strength and IP packet transmission and reception amounts in a state where the terminal is connected to the IP network and switching, when the received signal strength is greater than the received signal strength threshold, from the connection to the IP network to a connection to a cellular network by means of the second communication unit.

In accordance with another aspect of the present invention, a communication network connection control method of a terminal is provided.The communication network connection control method includes measuring received signal strength and a medium access control layer transmission/reception rate in a state where the terminal is connected to a wireless local area network, switching, when the received signal strength of the wireless local area network is equal to or less than a received signal strength threshold, from the connection to the wireless local area network to a connection to a cellular network, comparing, when the received signal strength is greater than the threshold, the medium access control layer transmission/reception rate with a medium access control layer transmission/reception rate threshold, and switching, when the medium access control layer transmission/reception rate is equal to or less than the medium access control layer transmission/reception rate threshold, from the connection to the wireless local area network to a connection to the cellular network.

In accordance with another aspect of the present invention, a communication network connection control method of a terminal is provided.The communication network connection control method includes checking, when an Access Point (AP) is detected in a state where the terminal is not connected to an Internet Protocol (IP) network, a join count to the AP, measuring, when the joint count is greater than a predetermined join count threshold, a movement speed of the terminal, ignoring, when the movement speed is greater than a predetermined movement speed threshold, the detected AP, connecting, when the movement speed is equal to or less than the movement speed threshold, to the detected AP.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a mobile terminal for controlling a connection to a data network according to an exemplary embodiment of the present invention;

FIG. 2 is a block diagram illustrating a configuration of a control, such as the control unit of FIG. 1, according to an exemplary embodiment of the present invention;

FIG. 3 is a flowchart illustrating a network connection control method according to an exemplary embodiment of the present invention;

FIG. 4 is a flowchart illustrating a network connection control method according to another exemplary embodiment of the present invention;

FIG. 5 is a flowchart illustrating a network connection control method according to another exemplary embodiment of the present invention;

FIG. 6 is a flowchart illustrating a network connection control method according to another exemplary embodiment of the present invention; and

FIG. 7 is a flowchart illustrating a network connection control method according to another exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The mobile terminal according to an exemplary embodiment of the present invention defines a metric for measuring and assessing the usability of Internet service from the user's view point in a Wireless Local Area Network (WLAN) environment and controls connection to the WLAN network or cellular network based on the metric. The mobile terminal according to an exemplary embodiment of the present invention controls the mobile terminal to connect to the cellular network when the usability metric of the WLAN is bad. The mobile terminal according to an exemplary embodiment of the present invention determines whether to connect to the WLAN based on the number of connections to an Access Point (AP) and the mobility of the mobile terminal when a WLAN AP is discovered in the state that the mobile terminal is performing data communication through the cellular network. Also, the mobile terminal according to an exemplary embodiment of the present invention determines the time point for controlling a connection seamlessly without assistance of another network server.

The mobile terminal according to an exemplary embodiment of the present invention measures the signal strength, Internet Protocol (IP) packet data rate (IP packet Reception (Rx)/Transmission (Tx)), congestion of WLAN to control connection to the cellular network and assesses the usability of the WLAN based on all or some of the measurement results. Also, the mobile terminal according to an exemplary embodiment of the present invention analyzes, when a WLAN AP is discovered, the number of AP discoveries and/or mobility of the mobile terminal to determine whether to maintain the connection to the WLAN.

At this time, the mobile terminal measures the radio quality through above described method to provide the radio quality to the base station and makes a handover decision by itself and controls network connection based on the measured radio quality in itself unlike the related-art method in which the base station makes a handover decision based on the analysis on the radio quality transmitted by the mobile terminal.

In the following, the description is made under the assumption that the WLAN is a Wi-Fi network and the cellular network is a Long Term Evolution (LTE) network. However, the present invention is not limited thereto. For example, the WLAN may be any similar or suitable WLAN network. Also, the cellular network may be any similar or suitable cellular network.

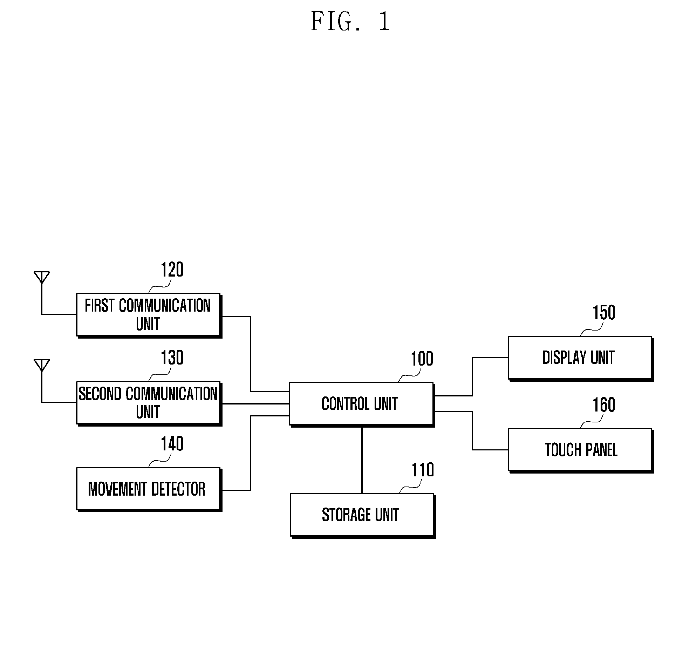

FIG. 1 is a block diagram illustrating a configuration of a mobile terminal for controlling connection to a data network according to an exemplary embodiment of the present invention.

Referring to FIG. 1, the first communication unit 120 is responsible for radio communication in connection with the Internet or other external device. Here, the first communication network 120 can be any of Wi-Fi, WiBro, WiMAX communication modules capable of establishing connection to a WLAN. The second communication unit 130 is responsible for radio communication with a base station of the cellular network. Here, the second communication unit 130 can be any of LTE, Wideband Code Division Multiple Access (WCDMA), and Global System for Mobile Communications (GSM) communication modules. In an exemplary embodiment of the present invention, the description is made under the assumption that the first communication unit 120 is the Wi-Fi communication module, and the second communication unit 130 is the LTE communication module.

The control unit 100 controls overall operations of the mobile terminal and connection to heterogeneous communication networks based on the communication network utilization environment and/or communication environment according to an exemplary embodiment of the present invention without assistance of a base station. The control unit 100 is capable of measuring the signal strength and packet data rate (e.g., IP packet Rx/Tx rate) of the WLAN, terminal collision (e.g., congestion) in the WLAN, number of discoveries of the corresponding WLAN AP, and or mobility of the terminal. The control unit 100 controls the connection to the WLAN or the cellular network based on all or some of the measurement results.

The storage unit 110 may include a program memory for storing an Operating System (OS) of the mobile terminal and application programs for implementing the procedure according to an exemplary embodiment of the present invention and a data memory for storing tables associated with the operations of the terminal and data generated by the application programs. The storage unit 110 is capable of storing the metric data for controlling the connection to the data communication network.

The motion detection unit 140 is capable of including sensors for detecting the motion and movement of the mobile terminal. In an exemplary embodiment of the present invention, the motion detection unit 140 includes a Global Positioning System (GPS) receiver and a gyro sensor.

The display unit 150 displays the information on the application running under the control of the display unit 100. Here, the application information includes the information for use in controlling a data communication network connection of the mobile terminal. The display unit 140 can be implemented with a Liquid Crystal Display (LCD) or an Organic Light Emitting Diode (OLED). The touch panel 160 can be implemented in one of resistive, capacitive, and electromagnetic types to detect a human body touch (e.g., a finger touch) and/or pen touch and generate a touch signal to the control unit 100. That is, the touch panel 160 can be implemented with at least one of capacitive, resistive, and electromagnetic type panels such that the capacitive panel detects user's finger touch gesture and the electromagnetic panel the pen touch gesture. Here, the display unit 150 and the touch panel 160 can be integrated into a touchscreen.

The above structured mobile terminal is capable of performing data communication with a data communication network by means of at least one of the first and second communication units 120 and 130. Here, the data communication network can be the Internet and, in the following description, the terms "first type communication" and "second type communication" are interchangeably used with the respective terms "Wi-Fi communication" and "LTE communication." In the data communication mode, the control unit 100 selects the Wi-Fi communication unit 120 first to analyze its usability and, if it is usable, performs data communication using the Wi-Fi communication unit 120 and, otherwise, using the LTE communication unit 130. The Wi-Fi communication is preferred because the Wi-Fi communication is a billing-free communication service while the LTE communication is a billing-based communication service.

The control unit 100 measures the signal strength of the AP in the state that the terminal is connected to the AP by means of the Wi-Fi communication unit 120. At this time, if the real packet data rate is low due to the IP packet data rate and/or Medium Access Control (MAC) layer collision in spite of the favorable AP signal strength, the control unit 100 releases the connection of the Wi-Fi communication unit 120 and establishes a connection to the cellular network for data communication by means of the LTE communication unit 130. In an exemplary embodiment of the present invention, the control unit 100 regards this state as the state in which the signal strength between the mobile terminal and the Wi-Fi communication network is favorable but network service is not affordable and thus initiates handover to the LTE network for improving the network service usability. If an AP is discovered, the control unit 100 measures the mobility of the terminal. At this time, if the terminal with high mobility attempts the connection to the Wi-Fi AP, the control unit 100 establishes the connection to the LTE network for data communication. The mobile terminal according to an exemplary embodiment of the present invention is capable of make a seamless connection to the Wi-Fi or LTE network without assistance of the network.

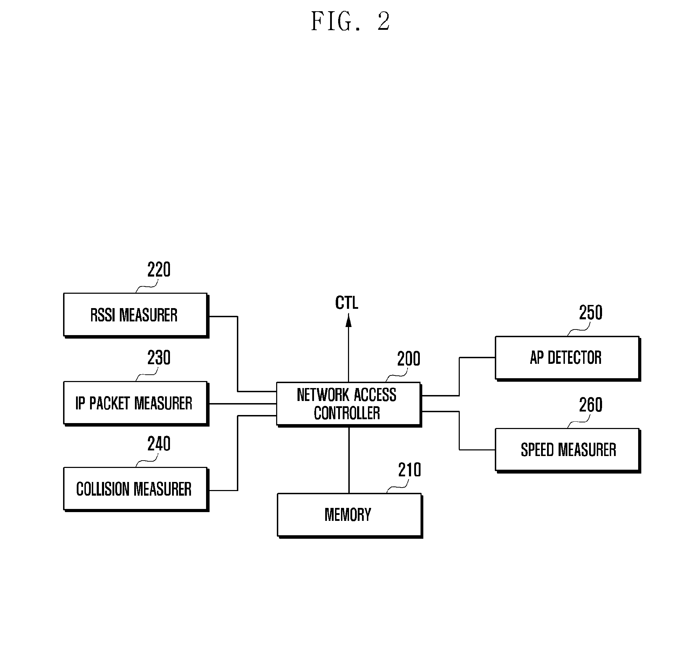

FIG. 2 is a block diagram illustrating a configuration of a control unit, such as the control unit of FIG. 1, according to an exemplary embodiment of the present invention.

Referring to FIG. 2, the Received Signal Strength Indicator (RSSI) measurer 220 measures the received signal strength of the Wi-Fi network. The IP packet measurer 230 measures the IP packet Tx/Rx rate. The collision measurer 240 measures the traffic collision (e.g., congestion) among the terminal in the Wi-Fi network. The AP detector 250 discovers APs of Wi-Fi communication network. The speed measurer 260 measures the movement speed of the mobile terminal by analyzing the motion detector 140. The memory 210 stores threshold values of the RSSI, Tx/Rx packet data rate, collision, and speed, and an AP detection time window and a counter for counting a number of AP detections.

The network connection controller 200 analyzes all or some of the measured RSSI, IP packet Tx/Rx, collision rate, number of AP detection, and movement speed of the terminal for use in controlling data communication network connection of the mobile terminal. At this time, if it is not possible to use the Wi-Fi network, the network connection controller 200 controls the terminal to establish a connection to the cellular network without assistance of a base station or a server.

First, the network connection controller 200 measures the received signal strength of the Wi-Fi AP by means of the RSSI measurer 220 in the state that the terminal is connected to the AP. At this time, if the RSSI value of the Wi-Fi AP is less than a predetermined threshold value, the network connection controller 200 releases the connection to the Wi-Fi AP and controls the second communication unit 130 to establish the connection to the LTE network for data communication.

Second, if the RSSI value of the Wi-Fi AP which has been measured by the RSSI measurer 220 in the state that the terminal is connected to the AP, the network connection controller 200 analyzes the usability of the Wi-Fi communication network. At this time, the usability of the Wi-Fi network can be determined based on the IP packet data rate and the Wi-Fi network congestion rate analysis. The IP packet measurer 230 measures the IP packet transmission and reception rates of the Wi-Fi network, and the network connection controller 200 that, when the IP packet transmission amount is less than the IP packet reception amount (i.e., the data packet throughput decreases due to the microwave noise (i.e., data packet throughput decreases)), the Wi-Fi network environment is bad and thus generates a control signal for switching the network. The collision measurer 240 measures the MAC layer transmission/reception failure rate, and the network connection controller 200 determines, when the MAC layer transmission/reception failure rate is greater than a predetermined threshold value, that the Wi-Fi network is congested (i.e., too many terminals attempt to connect to the Wi-Fi AP) and thus generates a control signal for switching the network. Accordingly, if it is determined that the data packet throughput decreases due to the Wi-Fi network congestion and/or microwave noise in spite of normal RSSI of the Wi-Fi network, the network connection controller 200 determines that it is not possible to receive data communication service through Wi-Fi network and thus releases the connection to the AP and establishes the connection to the cellular network (e.g., 3^{rd} Generation (3G) or LTE network).

Third, in the case where the mobile terminal is moving at a speed over a predetermined level in the Wi-Fi network composed of a plurality of APs, the mobile terminal repeats unnecessary attempts to connect to the APs. That is, the mobile terminal attempts connection to a discovered AP and, if it moves out of the coverage of the AP, the connection to the AP is broken immediately. Accordingly, the mobile terminal moving at a certain speed roams across the APs while repeating connection establishment and release to the network, resulting in a failure of the data communication service. The network connection controller 200 detects a newly found AP by means of the AP detector 250 and measures the speed of the mobile terminal by means of the speed measurer 260. If the number of AP connections within a predetermined time duration is greater than a predetermined threshold, the network connection controller discontinues attempts to connect to the newly found AP and controls the second communication unit 130 to establish the connection to the cellular network (e.g., 3G or LTE network) for data communication.

As described above, the control unit 100 of the mobile terminal according to an exemplary embodiment of the present invention controls the network connection based on the metrics of RSSI, IP packet transmission/reception rate, Wi-Fi MAC layer failure, and movement speed of the terminal. At this time, the network connection control of the control unit 100 can be implemented in various ways as follows.

First, the control unit 100 determines whether to switch the connection from Wi-Fi to LTE based on the increase of the RSSI and IP packet Tx and Rx amount. If the RSS is equal to or greater than the threshold value and if the IP packet Tx amount and Rx amount are greater than the thresholds, the control unit 100 maintains the Wi-Fi network connection. However, if the IP packet Rx amount is equal to or less than the threshold although the RSSI value is equal to or greater than the threshold value and the IP packet Tx amount is greater than the threshold, this means that there is any problem in packet transmission/reception due to a Wi-Fi network problem (e.g., noise) and thus, the control unit 100 releases the connection to the Wi-Fi network and establishes the connection to the cellular network.

Second, the control unit 100 determines whether to switch the connection from Wi-Fi to LTE based on the RSSI and MAC layer transmission/reception failure rate. If the RSSI is equal to or greater than the threshold value and if the MAC layer transmission/reception failure rate is less than the threshold value, the control unit 100 maintains the connection to the Wi-Fi network. Otherwise, if the MAC layer transmission/reception failure rate is equal to or greater than the threshold value although the RSSI is equal to or greater than the threshold value, the control unit 100 releases the connection to the Wi-Fi network and establishes the connection to the cellular network. Here, the MAC layer transmission/reception failure rate may increase when the number of terminals attempting connection to an AP increases. The MAC layer transmission/reception failure rate can be calculated based on the number of transmission packet collisions, the number of packets dropped due to the MAC layer retransmissions exceeding the maximum limit, and/or the number of packets dropped due to a Cyclic Redundancy Check (CRC) error in the received packet.

Third, the control unit 100 determines whether to switch the connection from Wi-Fi to LTE based on the RSSI, IP packet Tx/Rx amount, and MAC layer transmission/reception failure rate. At this time, if the IP packet Rx amount is less than the threshold value or if the MAC layer transmission/reception failure rate is equal to or greater than the threshold value although the RSSI is equal to or greater than the threshold value, the control unit 100 releases the connection to the Wi-Fi network and establishes the connection to the cellular network.

Fourth, the control unit 100 determines whether to switch the connection from Wi-Fi to LTE based on the movement speed of the terminal. If it is determined that the movement speed of the terminal is equal to or greater than a predetermined threshold, the control unit 100 controls so as, if any Wi-Fi AP is found, to not attempt connection to the AP but establish the connection to the cellular network.

Fifth, the control unit 100 is capable of controlling the network connection of the mobile terminal with the third and fourth connection control methods.

The aforementioned five communication network connection control schemes are described in detail hereinafter.

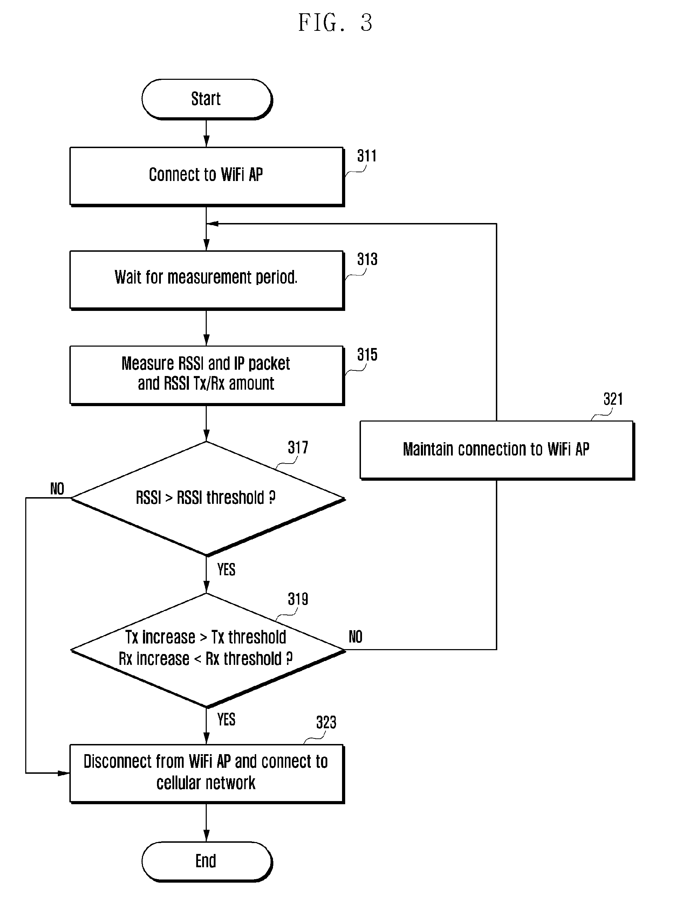

FIG. 3 is a flowchart illustrating a network connection control method according to an exemplary embodiment of the present invention. The exemplary embodiment of FIG. 3 is directed to the case where the network connection is controlled based on the RSSI and IP packet Tx and Rx amounts measured by the mobile terminal.

Referring to FIG. 3, if a Wi-Fi AP is detected, the mobile terminal connects to the AP at step 311. In the state where the mobile terminal is connected to the AP, the mobile terminal is capable of performing data communication through the Wi-Fi network and performs measurement to determine whether to maintain the connection to the Wi-Fi network at a predetermined measurement period. Here, the measurement period is a time interval for measuring usability of the Wi-Fi network and can be set to a fixed value or a variable. If the measurement period arrives, the terminal detects the measurement period arrival at step 313 and measures the RSSI and IP packet Tx amount and Rx amount at step 315.

Afterward, the control unit 100 analyzes measured RSSI and the IP packet Tx/Rx amount to control the connection to the communication network. The control unit 100 compares the measured RSSI and a predetermined RSSI threshold at step 317. Here, the RSSI threshold can be set to a fixed value or a variable varying dynamically. If the measured RSSI is equal to or less than the RSS threshold at step 317, the control unit 100 controls the first communication unit 120 to release the connection to the Wi-Fi network and controls the second communication unit to establish the connection to the cellular network at step 323. That is, the control unit 100 releases the connection to the Wi-Fi network and establishes the connection to a heterogeneous network for maintaining the data communication service. At this time, the heterogeneous network can be a cellular communication network such as 3G and LTE or another IP network such as WiMAX.

If the RSSI is greater than the RSSI threshold, this means that the received signal strength of the AP is sufficient. Accordingly, if it is determined that the measured RSSI is greater than the RSSI threshold at step 317, the control unit 100 analyzes the IP packet Tx/Rx amount of the Wi-Fi network at step 319. The IP packet Tx amount and Rx amount are analyzed based on the predetermined Tx threshold and Rx threshold, and the Tx and Rx thresholds may be set to fixed values or variables varying dynamically. If the IP packet Tx amount is greater than the Tx threshold and the IP packet Rx amount is less than the Rx threshold at step 319, the control unit 100 controls to release the connection to the Wi-Fi network and establishes the connection to the cellular network (e.g., 3G, LTE, etc.). If the IP packet Tx amount is greater than the Tx threshold and if the IP packet Rx amount is less than the Rx threshold, this means that the transmission packet amount is large but the reception packet amount is small and, in this case, the control unit 100 determines that there is a problem in the Wi-Fi network in spite of the sufficient signal strength of the AP and thus releases the connection to the Wi-Fi network.

Otherwise, if the IP packet Tx amount is equal to or less than the Tx threshold and Rx amount is equal to or greater than the Rx threshold, or if the Tx amount is greater than the Tx threshold and the Rx amount is equal to or greater than the Rx threshold, or if the Tx amount and the Rx amount are less than the respective Tx threshold and Rx threshold at step 319, the control unit 100 maintains the connection to the current AP at step 321.

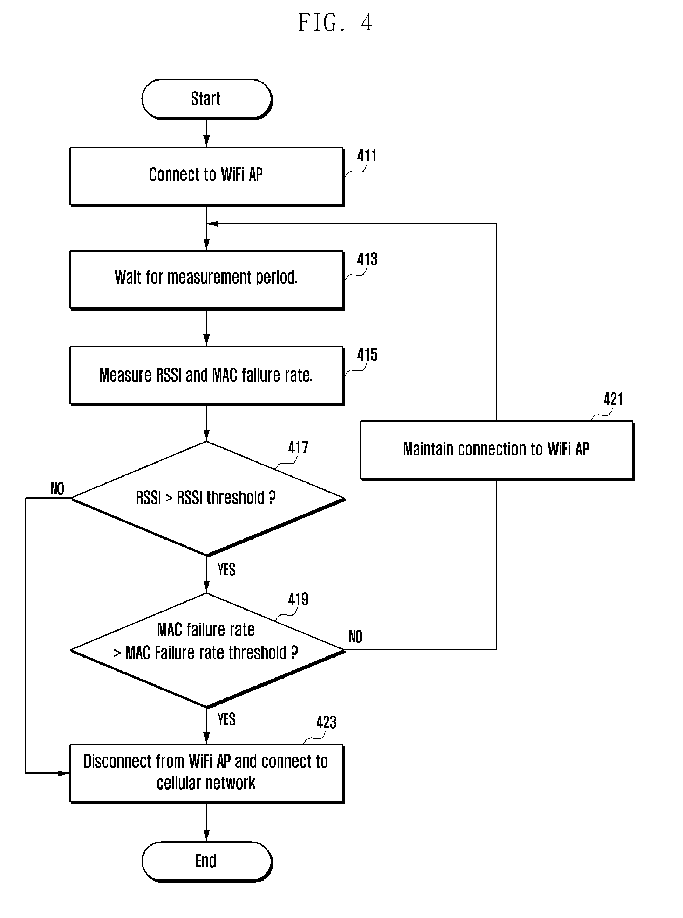

FIG. 4 is a flowchart illustrating a network connection control method according to another exemplary embodiment of the present invention. The exemplary embodiment of FIG. 4 is directed to the case where the network connection is controlled based on the RSSI and MAC layer transmission/reception failure rate measured by the mobile terminal.

Referring to FIG. 4, the mobile terminal is in the state connected to a Wi-Fi AP at step 411. In this state, the control unit 100 performs measurement at a predetermined measurement period to determine whether to maintain the connection. If the next measurement period arrives, the control unit 100 detects this at step 413 and measures RSSI and MAC layer transmission/reception failure rate (e.g., MAC failure rate) of the currently connected AP at step 415. In an exemplary embodiment of the present invention, the control unit 100 determines, when the MAC layer transmission/reception failure late is great, that there is MAC layer congestion and significant noise and interference in the WLAN. The MAC layer transmission/reception failure rate can be calculated based on various factors such as the transmission packet collision, the number of packets dropped due to the MAC layer retransmissions exceeding the maximum limit, and the number of packets dropped due to the CRC error. Afterward, the control unit 100 controls connection to the to the communication network based on the analysis on the measured RSSI and MAC layer transmission/reception failure rate.

First, the control unit 100 compares the measured RSSI with the RSSI threshold and, if the measured RSSI is equal to or less than the RSSI threshold, controls the first communication unit 120 to release the connection to the Wi-Fi network and controls the second communication unit 130 to establish the connection to the cellular network at step 423.

If the measured RSSI is greater than the RSSI threshold at step 417, this means that the signal strength of the AP is sufficient and thus the control unit 100 compares the MAC layer transmission/reception failure rate (i.e., MAC failure rate) with the MAC layer transmission/reception failure rate threshold (i.e., MAC failure rate threshold) at step 419. If the measured MAC failure rate is greater than the MAC failure rate threshold, this means that the Wi-Fi network is congested and thus the control unit 100 controls to release the Wi-Fi connection and establish the connection to the cellular network at step 423. That is, when the MAC layer failure is greater than the MAC failure rate threshold, the control unit 100 determines that there is a packet transmission/reception problem caused by Wi-Fi network congestion or interference and noise although the signal strength of the AP is sufficient. In an exemplary embodiment of the present invention, the control unit 100 is capable of determining the MAC failure rate based on the arithmetical or weighted sum of or individuals of the number of transmission packet collisions, the number of packets dropped by retransmission exceeding the maximum limit, and/or the number of packets dropped due to the CRC error. Otherwise, if the measured MAC failure rate is equal to or less than the MAC failure rate threshold at step 419, the control unit 100 maintains the connection to the current AP at step 421.

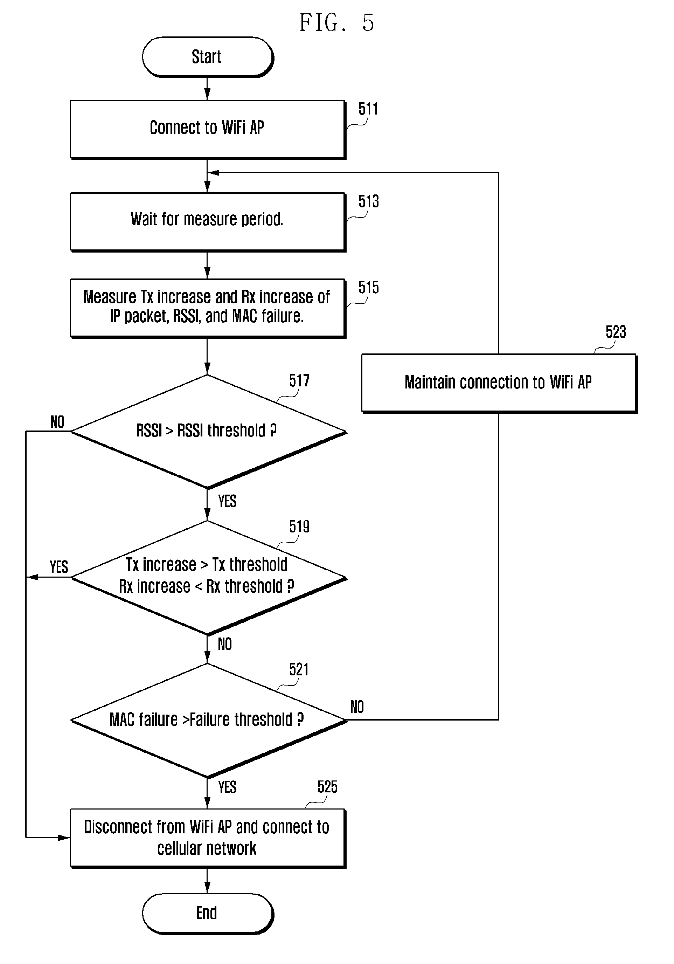

FIG. 5 is a flowchart illustrating a network connection control method according to another exemplary embodiment of the present invention. The exemplary embodiment of FIG. 5 is directed to the case where the network connection is controlled based on the RSSI, IP packet Tx/Rx amounts, and MAC failure rate analyzed by the mobile terminal.

Referring to FIG. 5, the control unit 100 measures the usability of the Wi-Fi network at every measurement period configured in the state connected to the Wi-Fi AP through steps 511 to 515. Here, the Wi-Fi network usability can be determined with the parameters of the RSSI, IP packet Tx/Rx amounts, and MAC failure rate of the currently connected AP. Next, the control unit compares the measured RSSI, IP packet Tx/Rx amounts, and MAC failure rate with respective thresholds to control the connection to the Wi-Fi and cellular network through steps 517 to 519.

If the measured RSSI is equal to or less than the RSSI threshold, the control unit 100 detects this at step 517 and releases the connection to the Wi-Fi network and establishes the cellular network (e.g., 3G, LTE, etc.) at step 525. Here, if the measured RSSI is greater than the RSSI threshold, this means that the signal strength of the AP is sufficient. In this case, the control unit 100 compares the measured IP packet Tx amount and Rx amount with respective Tx and Rx thresholds at step 519. If the measured Tx packet amount is greater than the Tx threshold and if the Rx packet amount is less than the Rx threshold, the control unit 100 controls the release from the Wi-Fi network and establish the connection to the cellular network. If the transmission packet amount is large while the reception packet amount is small, this means that there is any problem in the Wi-Fi network although the signal strength of the AP is sufficient. If the condition is not fulfilled at step 519, the control unit compares the measured MAC failure rate with the MAC failure rate threshold at step 521 and, if the measured MAC failure rate is greater than the MAC failure rate threshold, the control unit 100 controls to release the connection to the Wi-Fi network and establish the connection to the cellular network at step 525.

If the measured RSSI is greater than the RSSI threshold at step 517; if the measured Tx packet amount is equal to or less than the TX threshold and the measured Rx amount is equal to or greater than the Rx threshold, or if the measured Tx is greater than the Tx threshold and the measured Rx amount is equal to or greater than the Rx threshold, or if the measured Tx amount is equal to or less than the Tx threshold and the measured Rx amount is less than the Rx threshold at step 519; and if the measured MAC failure rate is equal to or less than the MAC failure rate threshold at step 521; the control unit 100 maintains the connection to the current Wi-Fi AP at step 523.

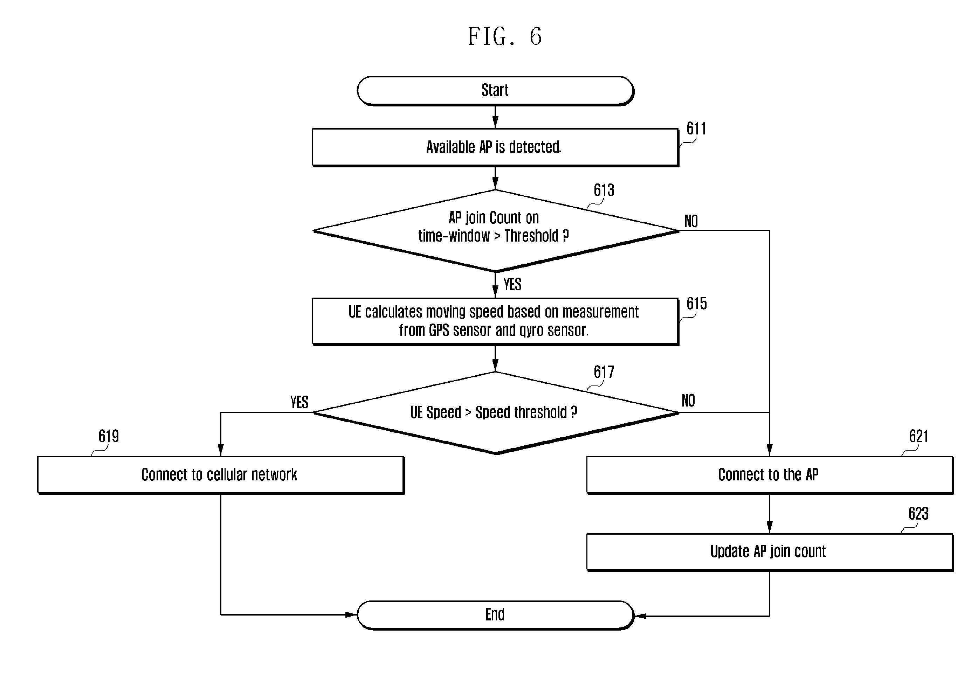

FIG. 6 is a flowchart illustrating a network connection control method according to another exemplary embodiment of the present invention. The exemplary embodiment of FIG. 6 is directed to the case where the network connection is controlled based on the movement speed of the mobile terminal.

Referring to FIG. 6, if an available Wi-Fi AP is detected at step 611, the control unit 100 checks the join count to the AP within a predetermined time window based on the connection history about the AP. Next, the control unit 100 determines whether the join count to the AP is within a predetermined count threshold at step 613. If the join count to the AP is equal to or less than the count threshold, the control unit 100 attempts a connection to the found AP at step 621 and updates the connection history at step 623. That is, the control unit 100 compares the join count to the found Wi-Fi with the count threshold and, if the join count to the AP is equal to or less than the count threshold, determines that the terminal does not move or moves little and thus connects to the AP with update of the join count. At this time, the number of connections to the AP can be counted by a counter. At this time, the AP discovery time can be stored to count out the connection out of the time window. That is, the counter counts only the connections to the AP within the time window.

If it is determined at step 613 that the join count to the AP within the time window is greater than the count threshold, the control unit 100 analyzes the sensor output of the motion detection unit 140 to measure the movement speed of the mobile terminal at step 615. That is, the control unit 100 calculates the movement speed of the mobile terminal based on the values measured by the GPS receiver and/or the gyro sensors. Next, the control unit 100 compares the movement speed of the mobile terminal with a speed threshold at step 617. Here, the speed threshold can be a value fixed or a variable varying dynamically. If it is determined at step 617 that the movement speed is equal to or less than the speed threshold, this means that the connection is expected not be broken immediately and thus the control unit 100 establishes the connection to the found AP at step 621 and updates the join count to the AP at step 623. Otherwise if it is determined at step 617 that the movement speed of the mobile terminal is greater than the speed threshold, the control unit 100 ignores the found AP and establishes the connection to the cellular network (e.g., 3G, LTE, etc.). This is because although the mobile terminal connects to the AP the connection is likely to be broken due to the movement speed of the terminal being too fast to maintain the connection.

As described above, when an AP is found, the control unit 100 checks the join count to the found AP within the time window.If the join count is greater than the count threshold, the control unit 100 measures the movement speed of the mobile terminal.If the movement speed of the terminal is greater than the speed threshold, the control unit 100 ignores the found AP and establishes the connection to the cellular network. This is because although the mobile terminal connects to the AP the connection is likely to be broken due to the movement speed of the terminal being too fast to maintain the connection.

In addition to the above-described methods, the control unit 100 is capable of measuring the movement speed of the terminal upon detecting the AP and, if the movement speed of the mobile terminal is faster than the speed threshold, ignoring the Wi-Fi AP and establishing the connection to the cellular network. That is, the network connection can be controlled based on only the movement speed of the mobile terminal without the operations steps 613, 621 to 623. In another exemplary embodiment, the network connection control method can be implemented in such a way that the control unit 100 checks the join count to the found AP within a predetermined time window.If the join count is greater than the count threshold, the control unit 100 ignores the found AP and establishes the connection to the cellular network and, otherwise, measures the movement speed of the mobile terminal.If the movement speed of the mobile terminal is faster than the threshold speed, the control unit 100 ignores the found AP and establishes the connection to the cellular network. That is, the control unit 100 establishes the connection to the AP only when the join count is equal to or less than the count threshold and the movement speed of the terminal is equal to or less than the threshold speed and, otherwise, if the join count is greater than the count threshold or if the movement speed of the terminal is greater than the speed threshold, the control unit 100 ignores the found AP and attempts connection to the cellular network.

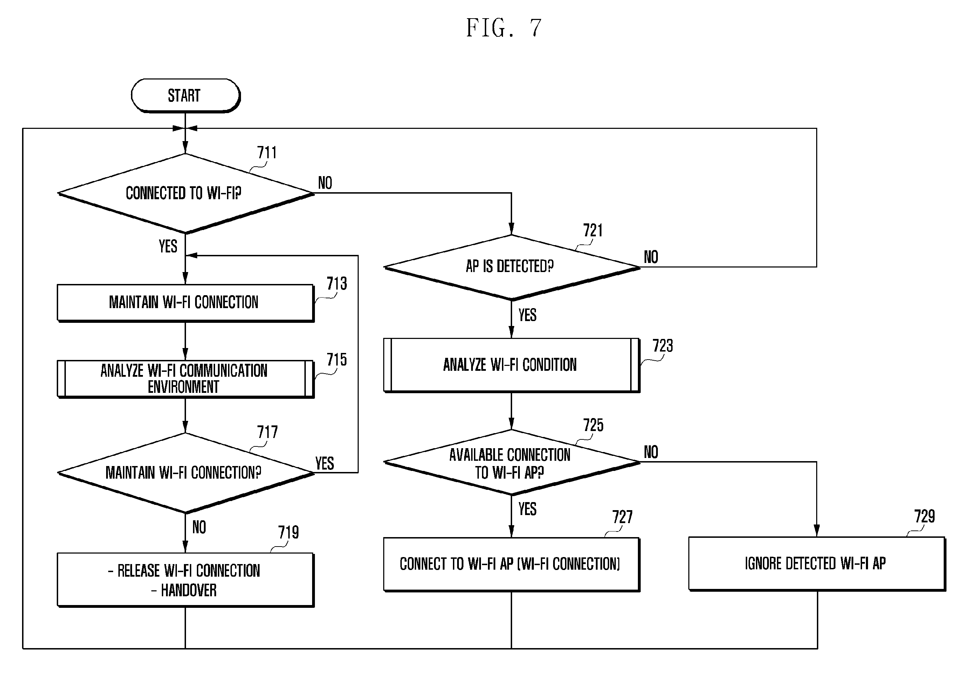

FIG. 7 is a flowchart illustrating a network connection control method according to another exemplary embodiment of the present invention. The exemplary embodiment of FIG. 7 is directed to the case where mobile terminal in the state connected to a Wi-Fi network analyzes the communication environment of the Wi-Fi network (e.g., RSSI, IP packet Tx/Rx amount, MAC layer transmission/reception failure rate, etc.) to control the connection and, when an AP is detected, controls the connection to the found AP depending on the movement speed of the terminal.

Referring to FIG. 7, if the mobile terminal is in the state connected to a Wi-Fi AP, the control unit 100 detects this at step 711 and uses the data communication service through the Wi-Fi network at step 713. In the state connected to the Wi-Fi network, the control unit 100 measures predetermined parameters at every measurement period to analyze the usability of the Wi-Fi network at step 715. Here, the parameters may include at least one of RSSI, packet Tx/Rx amount, and MAC layer transmission/reception failure rate. At this time, the control unit 100 is capable of determining the usability of the Wi-Fi network by comparing the RSSI and packet Tx/Rx amount with respective thresholds as described above with reference to FIG. 3, and compares, by comparing the RSSI and MAC layer transmission/reception failure rate with respective thresholds as described above with reference to FIG. 4, or by comparing the RSSI, packet Tx/Rx amount, an MAC layer transmission/reception rate with the respective thresholds.

If it is determined that the usability of the Wi-Fi network is high, the control unit detects this at step 717 and returns the procedure to step 713 to maintain the Wi-Fi connection. Otherwise, if it is determined that the usability of the Wi-Fi network is bad, the control unit controls to release the connection to the Wi-Fi AP and establishes the connection to the cellular network in step 719.

As described above, the control unit 100 of the mobile terminal in the state connected to the Wi-Fi AP releases, when the Wi-Fi signal strength is weak, the connection to the Wi-Fi AP and establishes the connection to the cellular network (e.g., 3G, LTE, etc.). If the packet Rx amount is less than the Rx threshold, the control unit 100 releases the connection to the Wi-Fi AP and establishes the connection to the cellular network (e.g., 3G, LTE, etc.) in spite of sufficient Wi-Fi signal strength. If the MAC layer congestion and noise (interference) is significant, the control unit 100 releases the connection to the Wi-Fi AP and establishes the connection to the cellular network (e.g., 3G, LTE, etc.) in spite of the sufficientWi-Fi signal strength. If the packet Rx amount less than the Rx threshold or if the MAC layer congestion and noise (e.g., interference) is significant, the control unit 100 release the connection to the Wi-Fi AP and establishes the connection to the cellular network (e.g., 3G, LTE. etc.) in spite of the sufficientWi-Fi signal strength. If any of the above conditions is not fulfilled, the control unit 100 maintains the connection to the current Wi-Fi AP to continue data communication.

If the mobile terminal is in the state not connected to a Wi-Fi AP, the control unit 100 monitors to detect an AP at step 721 and, if an AP is detected, analyzes the state of the mobile terminal and/or the movement speed of the mobile terminal to determine whether to connect to the found AP at step 723. At this time, the determination can be performed with the above described parameters including the join count to the AP with the time window and/or the movement speed of the terminal, and the control unit 100 is capable of performing the analysis procedure for controlling connection to the Wi-Fi or cellular network as the procedure of FIG. 6. That is, the control unit checks, when an AP is found, the join count to the AP within the time window. If the joint count is equal to or greater than the count threshold, the control unit 100 measures the movement speed of the mobile terminal and, if the movement speed of the terminal is equal to or greater than the speed threshold, ignores the AP. Otherwise, if the join count is less than the join threshold or if the movement speed of the terminal is less than the speed threshold, the control unit attempts connection to the fond AP.

However, the control unit 100 is capable of determines whether to connect to the AP in another way different from the analysis in FIG. 6 at step 723. That is, the control unit 100 is capable of measuring, when an AP is detected, the movement speed of the terminal immediately and, if the movement speed of the terminal is greater than the speed threshold, ignoring the found AP and establishing a connection to the cellular network. In another method, when an AP is detected, the control unit 100 attempts, if the join count to the AP is equal to or less than the count threshold and the movement speed of the terminal is equal to or less than the speed threshold, connection to the AP and, otherwise, if the join count is greater than the count threshold or if the movement speed of the mobile terminal is greater than the speed threshold, ignores the found AP.

After analyzing the condition for determining whether to connect to the AP at step 723, the control unit 100 determines at step 725 whether it is available to connect to the AP and, if so, attempts connection to the AP at step 727 and, otherwise, ignores the found AP at step 729. As described above, if it is predicted that the terminal connects to and disconnects from the Wi-Fi AP repeatedly due to the fast movement speed, the control unit 100 ignores the Wi-Fi AP and establishes the connection to the cellular network (e.g., 3G or LTE network) to improve the network service utilization.

According to an exemplary embodiment of the present invention, if the mobile terminal is connected to a cellular network or a WLAN, the control unit 100 searches for the Wi-Fi AP (i.e., available AP) at a predetermined measurement period or search period. Here, the period can be set to a value fixed or incremented exponentially, or variable depending to the condition of the cellular network (e.g., 3G, LTE, etc.). In the case that an available AP is found, the control unit analyzes the join count to the found AP and/or movement speed of the terminal to determine whether to connect to the AP. Once the terminal has connected to the AP through the above procedure, the terminal is capable of performing data communication through the Wi-Fi network. In this state, the control unit 100 analyzes the usability (e.g., environment) of the Wi-Fi network and, if the packet Tx/Rx amount and MAC layer transmission reception failure rate are bad in spite of sufficientRSSI, performs handover from the Wi-Fi network to the cellular network or another WLAN.

As described above, in the state connected to a Wi-Fi AP, if the MAC layer congestion and noise (e.g., interference) decreases the real data packet transmission rate, the mobile terminal according to an exemplary embodiment of the present invention attempts to connect to a cellular network to avoid maintaining the Wi-Fi connection unnecessarily. At this time, the mobile terminal is capable of determining the network connection timing (e.g., seamless connection management time) without assistance of the network, thereby reducing network overhead for network connection control algorithm implementation and terminal implementation complexity.

As described above, the network connection control apparatus and method of the mobile terminal according to exemplary embodiments of the present invention are capable of switching, when the MAC layer congestion and noise (e.g., interference) are significant due to too many users connected to the same AP in spite of the signal strength of the WLAN AP is storing, the connection to another data communication network. Also, the network connection control apparatus and method of the mobile terminal according to exemplary embodiments of the present invention is advantageous to establish a connection to the best network for data communication from the view point of the terminal. In the case that the Wi-Fi signal strength is weak, the mobile terminal is capable of securing communication service reliability by switching the connection from the Wi-Fi AP to a heterogeneous network (e.g., 3G, LTE, etc.). In the case that the MAC layer congestion and noise (e.g., interference) is significant in spite of strong Wi-Fi signal strength, the mobile terminal is capable of securing communication service reliability by switching the connection to a heterogeneous network (e.g., 3G, LTE, etc.). In the case that the mobile terminal connects to and disconnects from a Wi-Fi AP frequently due to its fast movement speed, the mobile terminal is capable of enhancing the network service usability by maintaining the connection to the 3G or LTE network. The mobile terminal is capable of determining the network connection timing (e.g., seamless connection management timing) without assistance of the network, resulting in reduction of network overhead and terminal implementation complexity.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A communication network connection control method of a terminal, the method comprising:
measuring received signal strength and Internet Protocol (IP) packet transmission and reception amounts in a state where the terminal is connected to an IP network;
switching, when the received signal strength is equal to or less than a predetermined received signal strength threshold, from the connection to the IP network to a connection to a cellular network;
comparing, when the received signal strength is greater than the threshold, the IP packet reception amount with a predetermined reception threshold; and
switching, when the IP packet reception amount is equal to or less than the reception threshold, from the connection to the IP network to the connection to the cellular network.

2. The method of claim 1, further comprising:
measuring a Medium Access Control (MAC) layer transmission/reception rate, and switching, when the received signal strength is greater than the received signal strength threshold;
comparing the MAC layer transmission/reception rate with a predetermined MAC layer transmission/reception rate threshold; and
switching, when the MAC layer transmission/reception rate is equal to or less than the MAC layer transmission/reception rate threshold, from the connection to the IP network to the connection to the cellular network.

3. The method of claim 2, further comprising maintaining, when the IP packet reception amount is greater than the IP packet reception amount threshold and the MAC layer transmission/reception rate is greater than the MAC layer transmission/reception rate threshold, the connection to IP network.

4. The method of claim 2, further comprising:
measuring, when an AP is found in a disconnected state, movement speed of the terminal; and
ignoring, when the movement speed is greater than a predetermined movement speed threshold, the found AP.

5. The method of claim 2, further comprising:
checking, when an AP is found in the disconnected state, a join count to the AP within a predetermined time window;
ignoring, when the join count is greater than a predetermined join count threshold, the found AP;
measuring, when the join count is equal to or less than the join count threshold, movement speed of the terminal; and
ignoring, when the movement speed is greater than a predetermined movement speed threshold, the found AP.

6. The method of claim 2, further comprising:
checking, when an AP is found in the state where the terminal is not connected to any IP network, a join count to the AP within a predetermined time window;
measuring, when the join count is greater than a predetermined join count threshold, movement speed of the terminal; and
ignoring, when the movement speed of the terminal is greater than a predetermined movement speed threshold, the found AP.

7. The method of claim 6, further comprising:
connecting, when the join count to the AP is equal to or less than the joint count threshold, to the found AP;
measuring, when the joint count to the AP is greater than the join count threshold, the movement speed of the terminal; and
connecting, when the movement speed is equal to or less than a predetermined movement speed threshold, to the found AP.

8. The method of claim 6, wherein the IP network is a Wi-Fi network, and the cellular network is one of 3rd Generation (3G) and Long Term Evolution (LTE) network.

9. The method of claim 8, wherein the measuring is performed at a predetermined period in a state where the terminal is connected to the IP network.

10. A communication network connection control apparatus of a terminal, the apparatus comprising:
a first communication unit which connects to an Internet Protocol (IP) network;
a second communication unit which connects to a cellular network;
a storage unit which stores a received signal strength threshold and a reception amount threshold; and
a control unit which controls measuring received signal strength and IP packet transmission and reception amounts in a state where the terminal is connected to the IP network and switching, when the received signal strength is greater than the received signal strength threshold, from the connection to the IP network to a connection to a cellular network by means of the second communication unit.

11. The apparatus of claim 10, where the storage unit stores a Medium Access Control (MAC) transmission/reception rate threshold, and the control unit controls comparing, when the received signal strength is greater than the received signal strength threshold, the MAC transmission/reception rate with the MAC transmission/reception rate threshold, and switching, when the MAC transmission/reception rate is equal to or less than the MAC transmission/reception rate threshold, from the connection to the IP network to connection to the cellular network by means of the second communication unit.

12. The apparatus of claim 11, wherein the control unit controls maintaining, when the IP packet reception amount is greater than the IP packet reception amount threshold and the MAC layer transmission/reception rate is greater than the MAC layer transmission/reception rate threshold, the connection to the IP network.

13. The apparatus of claim 11, further comprising a movement detector which measures movement speed of the terminal, wherein the storage unit stores a movement speed threshold, and the control unit controls ignoring, when the movement speed is greater than the movement speed threshold, an Access Point (AP) found by means of the first communication unit.

14. The apparatus of claim 13, wherein the IP network is a Wi-Fi network, and the cellular network is one of 3rd Generation (3G) network and Long Term Evolution (LTE) network.

15. The apparatus of claim 14, wherein the control unit controls performing measurement at a predetermined period in a state where the terminal is connected to the Wi-Fi network.
